# EUROPEAN PATENT APPLICATION

(11) **EP 4 756 923 A1**
(43) Date of publication of application: **10.06.2026**
(21) Application number: 24849061.7
(22) Date of filing: 25.07.2024
(51) Int. Cl.: H01M 4/525, C01G 53/00, H01M 4/505

(54) **POSITIVE ELECTRODE ACTIVE MATERIAL FOR LITHIUM ION SECONDARY BATTERIES, AND LITHIUM ION SECONDARY BATTERY**

(30) Priority: 28.07.2023 JP 2023123249
(71) Applicant: SUMITOMO METAL MINING CO., LTD., Tokyo 105-8716 (JP)
(72) Inventor: KANEDA, Haruki, Niihama-shi, Ehime 792-0002 (JP); KOYAMA, Yuki, Niihama-shi, Ehime 792-0002 (JP)
(74) Representative: Watermeyer, Nicholas
(86) International application number: PCT/JP2024/026703
(87) International publication number: WO 2025/028407

(57) **Abstract**

A positive electrode active material for a lithium-ion secondary battery contains a lithium nickel complex oxide having a hexagonal crystalline layered structure. The lithium nickel complex oxide has a ratio by mole of Li:Ni:M=a:b:c (where 0.90≤a<1.00, 0.80≤b<1.00, 0.00<c≤0.20, b+c=1, and element M is at least one element selected from the group consisting of Mn, Co, Al, Ti, Zr, W, Fe, Si, Nb, Mg, Ca, B, Na, K, Mo, Cu, V, P, and Ba). An occupancy of nickel existing in a lithium site obtained from a powder neutron diffraction pattern is 2.5% or more and 10.0% or less. A half width of a diffraction peak on a (003) plane in a powder X-ray diffraction pattern is 0.054° or more and less than 0.074°.

## Description

### TECHNICAL FIELD

The present invention relates to a positive electrode active material for a lithium-ion secondary battery, and a lithium ion secondary battery.

### BACKGROUND ART

In recent years, with the growing popularity of portable electronic devices, such as mobile phone terminals, laptop computers, and the like, it is strongly desired to develop small and lightweight non-aqueous electrolyte secondary batteries having high energy density and durability. Also, it is strongly desired to develop high-output secondary batteries as batteries for power tools and batteries for electric vehicles including hybrid vehicles.

A non-aqueous electrolyte secondary battery, such as a lithium-ion secondary battery or the like, is one type of secondary battery that satisfies such a requirement. A lithium-ion secondary battery using, as a positive electrode active material, a lithium metal complex oxide having a layered or spinel-type crystal structure can achieve a voltage as high as substantially 4 V, and thus is increasingly being put into practice as a battery with high energy density.

Examples of the proposed lithium metal complex oxide include, for example: lithium-cobalt complex oxide (LiCoO₂) that is relatively readily synthesized; lithium nickel complex oxide (LiNiO₂) and lithium-nickel-cobalt-manganese complex oxide (LiNi_{1/3}Co_{1/3}Mn_{1/3}O₂) each using nickel that is more inexpensive than cobalt; and lithium-manganese complex oxide (LiMn₂O₄) and lithium-nickel-manganese complex oxide (LiNi_{0.5}Mn_{0.5}O₂) each using manganese.

In recent years, there is a need for further improvement in the performance of lithium-ion secondary batteries, and various studies have been conducted.

For example, Patent Documents 1 to 5 disclose that lithium-ion secondary batteries using lithium complex oxides controlled in terms of particle characteristics can be enhanced in cycle characteristics, i.e., a capacity maintenance rate during repeated charging and discharging.

### RELATED ART DOCUMENTS

### PATENT DOCUMENTS

Patent Document 1: Japanese Unexamined Patent Application Publication No. 2001-243949
Patent Document 2: Japanese Unexamined Patent Application Publication No. 2004-355824
Patent Document 3: Japanese Unexamined Patent Application Publication No. 2017-188444
Patent Document 4: Japanese Unexamined Patent Application Publication No. 2017-188445
Patent Document 5: International Publication No. WO2017/169129

### SUMMARY OF THE INVENTION

### PROBLEMS TO BE SOLVED BY THE INVENTION

Lithium-ion secondary batteries are increasingly used in various applications as described above, and there is a need for further improvement in their performance. Therefore, it is required to rely on a method different from conventional ones for enhancing performance of a positive electrode active material for a lithium-ion secondary battery, such as cycle characteristics and the like, when used in the lithium-ion secondary battery.

In view of the above issue in the art, in one aspect of the present invention, it is an object to provide a positive electrode active material for a lithium-ion secondary battery having excellent cycle characteristics when used in the lithium-ion secondary battery.

### MEANS FOR SOLVING THE PROBLEMS

According to one aspect of the present invention for addressing the above issue, a positive electrode active material for a lithium-ion secondary battery containing a lithium nickel complex oxide having a hexagonal crystalline layered structure is provided. The lithium nickel complex oxide contains lithium (Li), nickel (Ni), and element M (M) at a ratio by mole of Li:Ni:M=a:b:c (where 0.90≤a<1.00, 0.80≤b<1.00, 0.00<c≤0.20, b+c=1, and element M is at least one element selected from the group consisting of Mn, Co, Al, Ti, Zr, W, Fe, Si, Nb, Mg, Ca, B, Na, K, Mo, Cu, V, P, and Ba). An occupancy of nickel existing in a lithium site (3b site) is 2.5% or more and 10.0% or less, in which the occupancy is obtained through analysis by a Rietveld method of a powder neutron diffraction pattern of the lithium nickel complex oxide. A half width of a diffraction peak on a (003) plane in a powder X-ray diffraction pattern of the lithium nickel complex oxide as measured using a Cu-Kα ray as an X-ray source is 0.054° or more and less than 0.074°.

### ADVANTAGEOUS EFFECTS OF THE INVENTION

According to one aspect of the present invention, it is possible to provide a positive electrode active material for a lithium-ion secondary battery having excellent cycle characteristics when used in the lithium-ion secondary battery.

### BRIEF DESCRIPTION OF THE DRAWINGS

[FIG. 1] FIG. 1 is a flow of a production method of a positive electrode active material.
[FIG. 2] FIG. 2 is a schematic explanatory diagram of a coin-type battery used for battery evaluation.
[FIG. 3] FIG. 3 is a schematic explanatory diagram of a laminate-type battery used for battery evaluation.
[FIG. 4] FIG. 4 is a powder neutron diffraction pattern of a lithium nickel complex oxide obtained in Example 1 and a simulation pattern obtained through Rietveld analysis.

### DETAILED DESCRIPTION OF THE INVENTION

Hereinafter, embodiments of the present invention will be described with reference to the drawings, but the present invention is not limited to the embodiments below. Various modifications and substitutions are possible in the following embodiments without departing from the scope of the present invention.

### [Positive Electrode Active Material for Lithium-Ion Secondary Battery]

In the following, a positive electrode active material for a lithium-ion secondary battery of the present embodiment (hereinafter referred to simply as "positive electrode active material") will be described.

### (1) Regarding Lithium Nickel Complex Oxide

The positive electrode active material of the present embodiment contains a lithium nickel complex oxide. The positive electrode active material of the present embodiment may consist of the lithium nickel complex oxide. However, in this case, the positive electrode active material containing unavoidable impurities or the like mixed in during the production process or the like is not excluded.

The lithium nickel complex oxide may have a hexagonal crystalline layered structure.

### (1-1) Regarding Form of Particles

No particular limitation is imposed on the form of particles of the lithium nickel complex oxide. For example, the lithium nickel complex oxide may contain at least one of independent primary particles, or secondary particles in which a plurality of primary particles are aggregated. Therefore, the lithium nickel complex oxide may contain both the independent primary particles and the secondary particles. Also, the lithium nickel complex oxide may consist of the independent primary particles or may consist of the secondary particles.

The lithium nickel complex oxide preferably contains the independent primary particles, and a percentage by number of the independent primary particles is preferably high. This is because, when the lithium nickel complex oxide contains the independent primary particles and the percentage by number of the independent primary particles is increased, it is possible to especially enhance cycle characteristics, i.e., a capacity maintenance rate during repeated charging and discharging, when the positive electrode active material of the present embodiment is used in a secondary battery. A conceivable reason for this is that, when the lithium nickel complex oxide contains the independent primary particles and the percentage by number of the independent primary particles is increased, it is possible to suppress collapse of particles during repeated charging and discharging and maintain many particles contributing to charging and discharging.

The percentage by number of the independent primary particles is preferably 30% or more and more preferably 50% or more relative to the total of the particles of the lithium nickel complex oxide. The percentage by number of the independent primary particles in the lithium nickel complex oxide may be 100%, i.e., the lithium nickel complex oxide may consist of the independent primary particles.

When the lithium nickel complex oxide contains secondary particles, the number of primary particles forming the contained secondary particles is preferably small. Specifically, the number of primary particles forming the secondary particles is preferably 15 or less, and more preferably 10 or less. By reducing the number of primary particles forming the secondary particles contained in the lithium nickel complex oxide, it is possible to especially enhance cycle characteristics, i.e., a capacity maintenance rate during repeated charging and discharging, when the positive electrode active material of the present embodiment is used in a lithium-ion secondary battery (hereinafter referred to simply as "secondary battery").

Whether the particles contained in the lithium nickel complex oxide are the primary particles, the secondary particles, or both can be roughly confirmed using a scanning electron microscope (SEM) observation image (hereinafter also referred to as "SEM image") of the particles, but accuracy may be insufficient. In the positive electrode active material according to the present embodiment, preferably, the particles are processed into cross sections, and the presence or absence of the primary particles and the secondary particles is determined using their SEM image.

An exemplary preferable determination method is as follows. Specifically, the lithium nickel complex oxide is embedded in a resin, followed by processing with a cross-section polisher (CP) or the like, thereby forming a state in which the cross sections of the particles are observable. Subsequently, their SEM image is observed to determine the presence or absence of the primary particles and the secondary particles. For the determination, preferably, 50 or more particles are used for the above evaluation. No particular limitation is imposed on the upper limit of the number of particles to be evaluated. Considering the efficiency of the evaluation, it is preferable to evaluate 200 or less particles. Note that the above-described percentage by number of the primary particles can be calculated from the above evaluation results.

Also, when using a band contrast of electron backscatter diffraction (hereinafter also referred to as "EBSD") or using a focused ion beam (FIB) processing device for the processing into cross sections, the cross sections of the particles can be confirmed using an observation image of an attached scanning ion microscope (SIM).

### (1-2) Constituent Elements

The lithium nickel complex oxide contains lithium (Li), nickel (Ni), and element M (M). The element M is, for example, at least one element selected from the group consisting of Mn, Co, Al, Ti, Zr, W, Fe, Si, Nb, Mg, Ca, B, Na, K, Mo, Cu, V, P, and Ba. Also, the lithium nickel complex oxide may contain a small amount of an element other than the above elements.

The lithium nickel complex oxide can contain lithium (Li), nickel (Ni), and element M (M), which are elements other than oxygen, at a ratio by mole (molar ratio) of Li:Ni:M=a:b:c.

The above a, b, and c satisfy 0.90≤a<1.00, 0.80≤b<1.00, 0.00<c≤0.20, and b+c=1.

The lithium nickel complex oxide can be represented by LiₐNi_{b}M_{c}O_{2+α}. α preferably satisfies -0.2≤α≤0.2. a, b, c, and element M are already described, and thus description thereof is omitted.

Hereinafter, each element will be described.

### (Lithium)

In the above ratio by mole, the value a, indicating the ratio by mole of Li, corresponds to a ratio by mole (Li/Me ratio) of lithium (Li) to an element (Me) other than lithium and oxygen. The element (Me) other than lithium and oxygen corresponds to Ni and element M. In the above ratio by mole, the range of a is 0.90≤a<1.00. That is, lithium is preferably deficient compared to the case of a=1.00, which is the stoichiometric ratio of the lithium nickel complex oxide.

By setting the value a to be 0.90 or more, it is possible to suppress reaction resistance to enhance the output of a battery. By setting the value a to be less than 1.00, it is possible to reduce the amount of a lithium compound adhered to the particle surfaces of the positive electrode active material of the present embodiment, i.e., the amount of alkali. Therefore, when the positive electrode active material of the present embodiment is applied to a secondary battery, it is possible to suppress generation of gas during a reaction in the battery.

The above a is preferably 0.92≤a<0.99.

### (Nickel)

In the above ratio by mole, the range of b, indicating the ratio by mole of Ni, is 0.80≤b<1.00. When the value b is in the above range, high battery capacity can be exhibited when the positive electrode active material of the present embodiment is applied to a secondary battery.

### (Element M)

In the above ratio by mole, the range of c, indicating the ratio by mole of element M, is 0.00<c≤0.20, preferably 0.02≤c≤0.20, and more preferably 0.05≤c≤0.20. Here, the lithium nickel complex oxide may contain a plurality of types of element M. In this case, preferably, the total ratio by mole of element M contained in the lithium nickel complex oxide satisfies the above range. Candidate elements of element M are already described, and thus description thereof is omitted. The types of element M contained in the lithium nickel complex oxide may be appropriately selected in accordance with required battery characteristics and the like.

For example, element M may contain Co. When the ratio by mole of Co in the above ratio by mole of c is c1, the range of c1 is preferably 0<c1≤0.20, more preferably 0.02≤c1≤0.18, and further preferably 0.03≤c1≤0.15. When the value c1 is in the above range, high thermal stability and output characteristics can be exhibited when the positive electrode active material of the present embodiment is applied to a secondary battery. When only Co is contained as element M, c is equal to c1. Also, as described above, the total ratio by mole of element M preferably satisfies the above-described range of c. Therefore, for example, c1+c2+c3, which is the sum with c2 and c3 described below, preferably satisfies the above-described suitable range of c.

Also, element M may contain Mn. When the ratio by mole of Mn in the above ratio by mole of c is c2, the range of c2 is preferably 0<c2≤0.20, more preferably 0.02≤c2≤0.20, and further preferably 0.05≤c2≤0.20. When the range of c2 is in the above range, thermal stability can be enhanced when the positive electrode active material of the present embodiment is applied to a secondary battery. When only Mn is contained as element M, c is equal to c2.

Element M may contain Al. When the ratio by mole of Al in the above ratio by mole of c is c3, the range of c3 is preferably 0<c3≤0.10, more preferably 0.01≤c3≤0.08, and further preferably 0.01≤c3≤0.06. When the range of c3 is in the above range, thermal stability can be enhanced when the positive electrode active material of the present embodiment is applied to a secondary battery. When only Al is contained as element M, c is equal to c3.

The composition of the lithium nickel complex oxide can be measured through quantitative analysis using inductively coupled plasma (ICP) optical emission spectrometry.

### (1-3) Occupancy of Nickel in Lithium Site (3b Site)

In the lithium nickel complex oxide contained in the positive electrode active material according to the present embodiment, the occupancy of nickel (Ni) in the lithium site (3b site), which is obtained through analysis by a Rietveld method of a powder neutron diffraction pattern measured by a powder neutron diffraction method, is preferably 2.5% or more and 10.0% or less, more preferably 2.6% or more and 8.0% or less, and further preferably 2.7% or more and 7.0% or less.

The occupancy of nickel in the lithium site (3b site) determined from the powder neutron diffraction pattern is also referred to as "Ni(Li(3b))" hereinafter.

When repeatedly charging and discharging a secondary battery, lithium is repeatedly intercalated into and deintercalated from the interlayer of the lithium nickel complex oxide. However, when a secondary battery is repeatedly charged and discharged, the interlayer repeatedly swells and shrinks in accordance with the intercalation and deintercalation of lithium. This changes the crystal structure of the lithium nickel complex oxide to form lithium not contributing to charging and discharging. This is considered to degrade the cycle characteristics.

In the lithium nickel complex oxide contained in the positive electrode active material of the present embodiment, nickel occupies some sites for lithium. Therefore, even if lithium is deintercalated from the interlayer of the lithium nickel complex oxide, nickel remains in the interlayer. That is, it is considered that nickel can function as a pillar of the interlayer to suppress change in the interlayer distance when the secondary battery is repeatedly charged and discharged. Therefore, even if the secondary battery is repeatedly charged and discharged, change in the crystal structure of the lithium nickel complex oxide can be suppressed to suppress the generation of lithium not contributing to charging and discharging. Therefore, when the positive electrode active material of the present embodiment is used in a secondary battery, it is possible to enhance cycle characteristics by a technique that has never been used conventionally, i.e., controlling the occupancy of nickel in the lithium site.

Specifically, when the Ni(Li(3b)) is 2.5% or more, it is considered that nickel can sufficiently exhibit the function of the interlayer pillar. This stabilizes the crystal structure during charging and discharging, and especially enhances the cycle characteristics. Also, when the Ni(Li(3b)) is 10.0% or less, it is possible to suppress degradation in the integrity of the crystal of the lithium nickel complex oxide. This ensures lithium contributing to charging and discharging in a sufficient amount, and suppresses reaction resistance to sufficiently enhance the battery capacity and output.

When calculating the Ni(Li(3b)), it is considered that an X-ray diffraction pattern is used for Rietveld analysis. However, in addition to nickel, the lithium nickel complex oxide contained in the positive electrode active material of the present embodiment can contain, as element M, an element difficult to identify using an X ray, such as cobalt, manganese, or the like. Also, it is difficult to accurately evaluate lithium, hydrogen, or oxygen, which is a light element, using an X ray. Therefore, it is generally difficult to calculate an accurate value of Ni(Li(3b)) when using an X-ray diffraction pattern.

By using a neutron ray, it is possible to accurately evaluate the elements contained in the lithium nickel complex oxide compared to using an X-ray diffraction pattern. Therefore, it is necessary to use a powder neutron diffraction pattern for calculating the Ni(Li(3b)).

### (1-4) Half Width of Peak on (003) Plane

The lithium nickel complex oxide contained in the positive electrode active material according to the present embodiment has a diffraction peak attributed to the (003) plane in a powder X-ray diffraction pattern measured through powder X-ray diffraction (hereinafter also referred to as "XRD") as measured using a Cu-Kα ray as an X-ray source. In the lithium nickel complex oxide contained in the positive electrode active material according to the present embodiment, the value of the half width of a diffraction peak on the (003) plane in the X-ray diffraction pattern is preferably 0.054° or more and less than 0.074°. The half width of the diffraction peak on the (003) plane refers to the width of a profile at an intensity value that is half the intensity of the diffraction peak attributed to the (003) plane.

The half width of the diffraction peak on the (003) plane is an index for understanding the crystallinity of the lithium nickel complex oxide. By setting the half width of the diffraction peak on the (003) plane to be less than 0.074°, it is possible to obtain the lithium nickel complex oxide having especially excellent crystallinity. Therefore, when the positive electrode active material of the present embodiment containing the lithium nickel complex oxide is applied to a secondary battery, it is possible to enhance the battery capacity as well, and obtain the secondary battery having excellent battery capacity and excellent cycle characteristics. However, even if the half width of the diffraction peak on the (003) plane is excessively reduced, the effect of enhancing the battery capacity is saturated. Therefore, the half width of the diffraction peak on the (003) plane is preferably 0.054° or more.

It is preferable to measure the X-ray diffraction pattern using an XRD diffractometer provided with a Bragg-Brentano optical system and using a flat-plate sample holder.

### (1-5) Median Diameter (D50)

The median diameter (D50) in a volume-based particle size distribution obtained by a laser diffraction scattering method of the positive electrode active material according to the present embodiment is preferably 0.5 µm or more and 20 µm or less, more preferably 1.0 µm or more and 10 µm or less, further preferably 2.0 µm or less and 8.0 µm or less, and particularly preferably 2.0 µm or more and 7.0 µm or less.

When the median diameter of the positive electrode active material according to the present embodiment is 20 µm or less, it is possible to sufficiently increase the contact area with the electrolyte to enhance the battery capacity when the positive electrode active material is applied to a secondary battery. Also, when the median diameter of the positive electrode active material according to the present embodiment is 0.5 µm or more, it is possible to improve the handleability at the time of production of the electrode.

The median diameter (D50) can be obtained, for example, from a volume cumulative value measured by a laser light diffraction scattering particle size distribution analyzer.

### (1-6) Average Primary Particle Size

The average primary particle size of the lithium nickel complex oxide is preferably more than 0.5 µm and 6.0 µm or less. Increasing the average primary particle size of the lithium nickel complex oxide to be more than 0.5 µm means that the sizes of the primary particles and the crystallites forming the primary particles can be sufficiently increased. This can increase the crystallinity of the lithium nickel complex oxide. Therefore, when the positive electrode active material of the present embodiment containing the lithium nickel complex oxide is applied to a secondary battery, it is possible to enhance the battery capacity as well, and obtain the secondary battery having excellent battery capacity and excellent cycle characteristics.

However, even if the average primary particle size of the lithium nickel complex oxide is excessively increased, the effect of enhancing the battery capacity is saturated. Therefore, the average primary particle size of the lithium nickel complex oxide is preferably 6.0 µm or less.

The average primary particle size of the lithium nickel complex oxide is obtained by selecting primary particles of the lithium nickel complex oxide observable in their entireties using a scanning electron microscope (SEM), measuring their major axis lengths, and averaging the measured major axis lengths. When calculating the average primary particle size, no particular limitation is imposed on the number of primary particles to be evaluated.

For example, when the lithium nickel complex oxide contains secondary particles, preferably, a total of 20 or more and 30 or less primary particles are selected from 10 or more and 20 or less secondary particles, and the major axis lengths of the selected primary particles are measured.

When the lithium nickel complex oxide contains independent primary particles not forming secondary particles, preferably five or more primary particles of the lithium nickel complex oxide are evaluated. No particular limitation is imposed on the upper limit of the number of primary particles to be used for this evaluation. For example, it is preferable to evaluate 20 or less primary particles.

When the lithium nickel complex oxide contains only secondary particles or only independent primary particles, the above-described number of primary particles can be selected from the secondary particles or the independent primary particles. Then, the major axis lengths of the selected primary particles can be measured, and the average value of the measured lengths can be used as the average primary particle size of the lithium nickel complex oxide.

When the lithium nickel complex oxide contains both secondary particles and independent primary particles, the above-described number of primary particles can be selected from the secondary particles and the independent primary particles. Then, the major axis lengths of all the selected primary particles can be measured, and the average value of the measured lengths can be used as the average primary particle size of the lithium nickel complex oxide.

By setting the median diameter (D50) of the positive electrode active material to be in the above-described range and setting the average primary particle size of the contained lithium nickel complex oxide to be in the above-described range, both the battery capacity and cycle characteristics can be especially enhanced when the positive electrode active material is applied to a secondary battery.

### (1-7) Amount of Eluted Lithium

From the viewpoint of suppressing the generation of gas in the secondary battery, the amount of lithium eluted in water (hereinafter also referred to as "eluted lithium amount") when the positive electrode active material of the present embodiment is immersed in water is preferably 0.15% by mass or less and more preferably 0.10% by mass or less relative to the entire positive electrode active material.

By setting the eluted lithium amount to be in the above-described range, it is possible to suppress the generation of gas in the secondary battery.

No particular limitation is imposed on the lower limit of the eluted lithium amount of the positive electrode active material of the present embodiment, and for example, the lower limit is preferably 0.05% by mass or more.

For especially suppressing the eluted lithium amount in the positive electrode active material, the lithium nickel complex oxide preferably contains Zr as element M. Alternatively, the eluted lithium amount can be suppressed by performing a water-washing treatment on the positive electrode active material.

### [Production Method of Positive Electrode Active Material for Lithium-Ion Secondary Battery]

No particular limitation is imposed on the production method of the positive electrode active material for the lithium-ion secondary battery as long as the positive electrode active material having the above characteristics can be obtained. In the following, an example of the production method of the positive electrode active material according to the present embodiment will be described.

Since the above-described positive electrode active material can be produced by the production method of the positive electrode active material of the present embodiment as described above, description of the already described matters will be partially omitted.

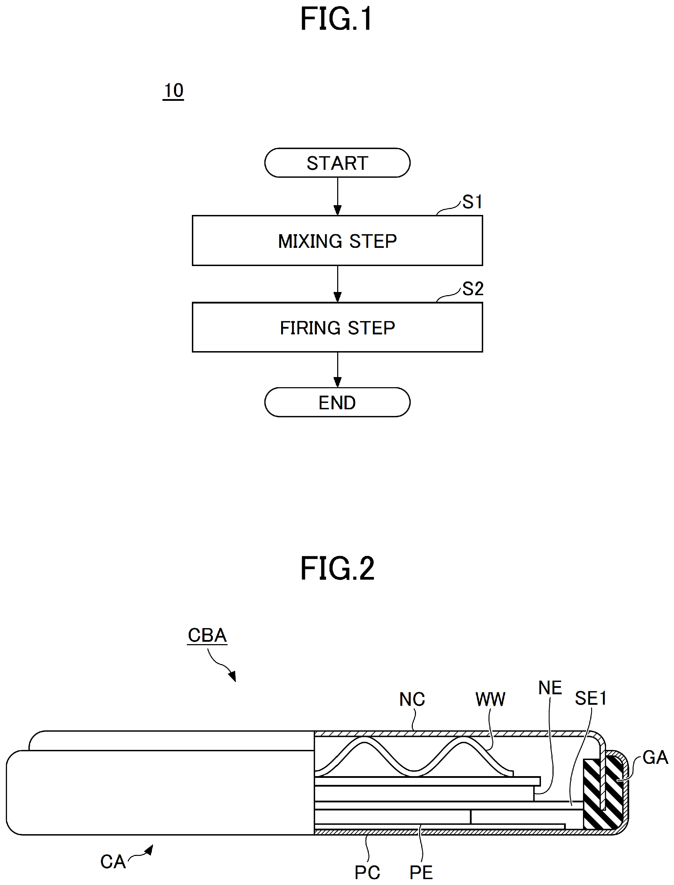

The production method of the positive electrode active material of the present embodiment can be performed, for example, in accordance with the flow 10 illustrated in FIG. 1. That is, the production method of the positive electrode active material of the present embodiment can include a mixing step (S1) and a firing step (S2).

In the mixing step (S1), a nickel complex compound and a lithium compound are mixed to obtain a raw material mixture.

In the firing step (S2), the raw material mixture is fired to produce a lithium nickel complex oxide.

In the mixing step (S1), element M may be added as a compound of element M separately from the nickel complex compound, or may be added using a nickel complex compound containing element M.

In the following, configuration examples of the steps will be described.

### (1) Mixing Step (S1)

In the mixing step (S1), as described above, the nickel complex compound and the lithium compound can be mixed to obtain the raw material mixture. Also, in the mixing step, the compound of element M can be optionally added and mixed.

The nickel complex compound, the lithium compound, and the optionally added element M can be added and mixed, for example, as powders (solid phases). In the following, materials that are raw materials used in the mixing step will be described.

### (1-1) Regarding Raw Materials

### (Nickel Complex Compound)

The nickel complex compound used in the mixing step (S1) can be obtained by a publicly known method. The content ratio (compositional ratio), i.e., a ratio by mole of Ni, which is an element in the nickel complex compound, to element M, such as Co or the like, is substantially maintained in the lithium nickel complex oxide particles. Therefore, the content ratio of each element is preferably in the same range as the content ratio in the lithium nickel complex oxide described above. Therefore, the nickel complex compound preferably contains nickel (Ni) and element M (M) at a ratio by mole of Ni: M=b:c. Since b, c, and element M are described for the lithium nickel complex oxide, description thereof is omitted.

The nickel complex compound used in the present embodiment may contain a small amount of an element other than oxygen and the above-described elements (element M, such as Ni, Co, or the like) in a range that does not impair the effects of the present invention.

The nickel complex compound may be hydroxide or oxide. Alternatively, the nickel complex compound may be a mixture of hydroxide and oxide. A production method of the nickel complex hydroxide is, for example, a method of performing neutralizing crystallization using an aqueous solution of a metal salt and an alkaline solution. Also, a portion or the entirety of the nickel complex hydroxide may be formed into nickel complex oxide, for example, by thermally treating the nickel complex hydroxide to remove water from the nickel complex hydroxide.

When the nickel complex compound is nickel complex hydroxide, Ni_{b}M_{c}(OH)_{2+β} is preferable. When the nickel complex compound is nickel complex oxide, Ni_{b}M_{c}O_{1+γ} is preferable. Since b, c, and element M are described for the lithium nickel complex oxide, description thereof is omitted. β and γ preferably satisfy -0.2≤β≤0.2 and -0.2≤γ≤0.2.

### (Lithium Compound)

No particular limitation is imposed on the lithium compound, and any publicly known compound containing lithium may be used. For example, one or more selected from lithium carbonate, lithium hydroxide, and lithium nitrate can be used. The lithium compound may be a mixture of two or more compounds selected from the above compounds.

More preferably, the lithium compound is one or more selected from lithium carbonate and lithium hydroxide from the viewpoints that the influence of residual impurities is small and these dissolve at a firing temperature. Also, more preferably, the lithium compound is lithium hydroxide from the viewpoint of obtaining a lithium nickel complex oxide having especially high crystallinity.

### (Compound of Element M)

As described above, in the mixing step, a compound of element M can be optionally added and mixed. No particular limitation is imposed on the type of the compound of element M. The compound of element M for use is preferably one or more selected from hydroxide, oxide, chloride, nitrate, sulfate, carbonate, and the like.

### (1-2) Mixing Method

No particular limitation is imposed on the mixing method of the nickel complex compound, the lithium compound, and the optionally added element M. It is preferable to sufficiently mix these particles to the extent that the particles do not collapse.

The mixing of the nickel complex compound and the like can be performed using a typical mixer, such as a shaker mixer, a Loedige mixer, a Julia mixer, a V-blender, or the like. When the mixing is not sufficiently performed, the ratio by mole (Li/Me) of lithium (Li) to an element (Me) other than lithium and oxygen varies between individual particles of the positive electrode active material, potentially raising problems, such as insufficient battery characteristics and the like. Therefore, preferably, the mixing is sufficiently performed. As described above, the element (Me) other than lithium and oxygen corresponds to Ni and element M.

### (1-3) Mixing Ratio

The lithium compound is preferably mixed such that Li/Me in the mixture obtained in the mixing step is 0.90 or more and less than 1.00. That is, it is preferable to perform the mixing such that Li/Me in the raw material mixture is equal to Li/Me in a fired product to be obtained. This is because the ratio by mole of each element, i.e., lithium, nickel, or element M, remains unchanged from before to after the firing step (S2), and thus Li/Me in the raw material mixture in the mixing step (S1) is retained in the fired product. The amounts (ratios) of the elements contained in the raw material mixture are substantially maintained in the lithium nickel complex oxide.

### (2) Firing Step (S2)

The firing step (S2) is a step of firing the raw material mixture obtained in the mixing step (S1) to obtain a fired product containing the lithium nickel complex oxide. When the raw material mixture is fired, lithium in the lithium compound diffuses into the nickel complex compound to form the lithium nickel complex oxide. The lithium compound melts at a temperature at the time of firing, and penetrates into the nickel complex compound to form a fired product of the lithium nickel complex oxide.

No particular limitation is imposed on firing conditions in the firing step (S2). The firing conditions can be selected such that a resulting lithium nickel complex oxide has an intended composition, and characteristics, such as, for example, the occupancy of nickel in the lithium site (3b site) are in desired ranges. In the following, a suitable example of the firing conditions will be described.

### (Atmosphere)

The firing atmosphere is preferably an oxidizing atmosphere. The oxidizing atmosphere preferably has an oxygen concentration of 80% by volume or more, and more preferably an oxygen concentration of 85% by volume or more. Since the oxidizing atmosphere can be an oxygen atmosphere, the oxygen concentration can be 100% by volume or less.

### (Firing Temperature)

The firing is preferably performed in two steps. That is, preferably, the temperature is increased to, and maintained at, a firing temperature in a first step (first firing step), and then increased to, and maintained at, a firing temperature in a second step (second firing step), followed by cooling.

For example, a first firing temperature, which is the firing temperature in the first step, is preferably 400°C or higher and 600°C or lower, and the retention time at the first firing temperature is preferably 5 hours or more.

The second firing temperature, which is the firing temperature in the second step, is preferably higher than 770°C and 950°C or lower, and the retention time at the second firing temperature is preferably 10 hours or more.

When the firing is performed in the above temperature pattern, the crystallinity of the lithium nickel complex oxide is increased even in a state in which Li is deficient from the stoichiometric ratio, thereby obtaining a positive electrode active material having high battery capacity. Also, the occupancy of nickel in the lithium site (3b site) can be easily adjusted to fall within the above-described range. Further, the crystallinity of the obtained lithium nickel complex oxide can be especially increased. In accordance with, for example, the content ratios of lithium and nickel in the intended composition of the lithium nickel complex oxide, the firing conditions, such as, for example, the firing temperature suitable for adjusting the occupancy of nickel in the Li site (3b site) to a desired range can change. Therefore, it is preferable, in accordance with the intended composition, to select the optimum firing temperature in the above temperature range, and select temperature conditions, such as the heating rate, the retention time, and the like.

When the firing is performed in the two steps, in the first firing step, which is the firing step at the first firing temperature in the first step, the lithium compound melts and sufficiently diffuses into the nickel complex compound to cause lithium and the nickel complex compound to react. Then, in the second firing step, which is the firing step at the second firing temperature in the second step, crystal growth can be promoted.

The production method of the positive electrode active material of the present embodiment may include any steps in addition to the mixing step and the firing step.

### (3) Crushing Step

The fired product obtained in the firing step (S2) may be used as the positive electrode active material of the present embodiment. However, although sintering between the particles of the fired product obtained after the firing step (S2) is suppressed, coarse particles may be formed through weak sintering or aggregation. In such a case, the production method of the positive electrode active material of the present embodiment may include a crushing step of crushing the fired product. By crushing the fired product, the sintering and aggregation can be eliminated to adjust a particle size distribution.

### (4) Pulverizing Step

The production method of the positive electrode active material of the present embodiment may include a pulverizing step of pulverizing the fired product or the crushed powder after the firing step (S2) or the crushing step.

When the production method of the positive electrode active material of the present embodiment includes the crushing step, the secondary particles can be formed into the primary particles, thereby obtaining the lithium nickel complex oxide formed mainly by the primary particles.

The primary particles obtained after the crushing step may be used alone or used as a mixture with aggregated particles.

After the crushing step and the pulverizing step, sieving may be performed to select particles having a desired particle size.

### (5) Water Washing Step

The production method of the positive electrode active material of the present embodiment may include a water washing step of washing the fired product obtained in the firing step (S2) with water.

By performing the water washing step, excess lithium remaining on the particle surfaces of the positive electrode active material can be removed.

In the water washing step, the fired product can be mixed with water and washed in the form of a slurry (slurry formation step).

No particular limitation is imposed on water used for the slurry formation in the water washing step. For example, water having an electrical conductivity of lower than 10 µS/cm can be preferably used, and water having an electrical conductivity of 1 µS/cm or lower can be more preferably used.

It is preferable to stir the produced slurry during the washing with water.

In the water washing step, after the formation into the slurry, the slurry is subjected to solid-liquid separation, i.e., filtration and dehydration, and thus water-washed powder can be obtained (solid-liquid separation step). No particular limitation is imposed on a device used for filtration and dehydration, and, for example, a centrifugal-type or filter press-type solid-liquid separator can be used.

In the water washing step, it is preferable to dry the water-washed powder containing water obtained after the solid-liquid separation (drying step). No particular limitation is imposed on drying conditions. For example, the drying is preferably performed, for example, at a temperature of 100°C or higher and 350°C or lower in an oxidizing atmosphere or vacuum atmosphere.

By water-washing a fired product of the lithium nickel complex oxide produced under the above-described conditions in which Li/Me is 1.00 or more in the mixing step, it is possible to obtain a lithium nickel complex oxide having an Li/Me of 0.90 or more and less than 1.00. However, in the above case, according to the studies conducted by the inventors of the present invention, it is not possible to obtain a positive electrode active material that satisfies the definition of the positive electrode active material of the present embodiment regarding, for example, the occupancy of nickel in the Li site (3b site). Thus, the effects of the positive electrode active material of the present embodiment cannot be obtained.

### [Lithium-Ion Secondary Battery]

The lithium-ion secondary battery of the present embodiment includes at least a positive electrode, a negative electrode, and a non-aqueous electrolyte. The positive electrode can contain the above-described positive electrode active material for the lithium-ion secondary battery.

Hereinafter, components of one configuration example of the secondary battery of the present embodiment will be described. The secondary battery of the present embodiment includes, for example, the positive electrode, the negative electrode, and the non-aqueous electrolyte, and is formed of components similar to those of a typical lithium-ion secondary battery. The embodiments described below are merely illustrative, and the lithium-ion secondary battery of the present embodiment can be embodied in various modified and improved forms based on knowledge of persons skilled in the art, including the following embodiments. Also, no particular limitation is imposed on applications of the secondary battery.

### (Positive Electrode)

The positive electrode of the secondary battery of the present embodiment may include the above-described positive electrode active material.

One example of a production method of the positive electrode will be described below. First, the above-described positive electrode active material (powder form), a conductive material, and a binding agent (binder) are mixed to form a positive electrode mixture. If necessary, activated carbon or a solvent for viscosity adjustment or the like is added. The resulting mixture is kneaded to form a positive electrode mixture paste.

The mixing ratio of the materials in the positive electrode mixture is a factor that determines the performance of the lithium-ion secondary battery, and can be adjusted in accordance with intended applications. The mixing ratio of the materials may be similar to that of a positive electrode of a publicly known lithium-ion secondary battery. For example, when the total mass of the solid content of the positive electrode mixture excluding the solvent is 100% by mass, the positive electrode active material may be contained in an amount of 60% by mass or more and 95% by mass or less, the conductive material may be contained in an amount of 1% by mass or more and 20% by mass or less, and the binding agent may be contained in an amount of 1% by mass or more and 20% by mass or less.

The obtained positive electrode mixture paste is applied to the surface of a current collector formed of, for example, aluminum foil, and is dried to diffuse the solvent, thereby producing a sheet-like positive electrode. If necessary, the positive electrode can be pressed by a roll press or the like in order to increase the electrode density. The sheet-like positive electrode obtained in this manner can be, for example, cut to an appropriate size in accordance with an intended battery, and can be used for the production of a battery.

As the conductive material, for example, graphite (natural graphite, artificial graphite, expanded graphite, or the like), a carbon black material, such as acetylene black, Ketjen black (registered trademark), or the like can be used.

The binding agent (binder) plays a role in binding active material particles together. For example, it is possible to use one or more selected from polyvinylidene fluoride (PVDF), polytetrafluoroethylene (PTFE), fluororubber, ethylene propylene diene rubber, styrene butadiene, a cellulose-based resin, polyacrylic acid, and the like.

If necessary, a solvent that disperses the positive electrode active material, the conductive material, and the like and dissolves the binding agent may be added to the positive electrode mixture. As the solvent, specifically, an organic solvent, such as N-methyl-2-pyrrolidone or the like, can be used. Also, activated carbon may be added to the positive electrode mixture in order to increase electric double layer capacitance.

The production method of the positive electrode is not limited to the above method described as an example, and may be any other method. For example, the positive electrode may be produced by press-molding the positive electrode mixture and then drying the resulting product in a vacuum atmosphere.

### (Negative Electrode)

The negative electrode for use may be a metal lithium, a lithium alloy, or the like. Alternatively, the negative electrode may be formed in the following manner. Specifically, a binding agent is mixed with a negative electrode active material enabling intercalation and deintercalation of lithium ions, followed by addition of an appropriate solvent, thereby forming a negative electrode mixture paste. The negative electrode mixture paste is applied to the surface of a metal foil current collector, such as copper or the like, followed by drying. If necessary, the resulting product is compressed in order to increase the electrode density.

As the negative electrode active material, for example, it is possible to use fired organic compounds, such as natural graphite, artificial graphite, a phenol resin, and the like, and powdered carbon materials, such as coke and the like. In this case, a fluorine-containing resin, such as PVDF or the like, can be used as the negative electrode binding agent, as in the positive electrode. As a solvent that disperses the active material and the binding agent, an organic solvent, such as N-methyl-2-pyrrolidone or the like, can be used.

### (Separator)

A separator may be interposed between the positive electrode and the negative electrode, if necessary. The separator is configured to separate the positive electrode and the negative electrode from each other, and retain the electrolyte. A publicly known separator can be used as the above separator. For example, it is possible to use a thin film formed of polyethylene, polypropylene, or the like and having many minute pores.

### (Non-Aqueous Electrolyte)

As the non-aqueous electrolyte, for example, a non-aqueous electrolytic solution can be used.

As the non-aqueous electrolytic solution, for example, it is possible to use a solution prepared by dissolving a lithium salt, serving as a supporting salt, in an organic solvent. Also, the non-aqueous electrolytic solution for use may be a solution prepared by dissolving a lithium salt in an ionic liquid. The ionic liquid refers to a salt that is formed of a cation other than a lithium ion and an anion and is in a liquid state even at normal temperature.

Examples of the organic solvent include, for example: cyclic carbonates, such as ethylene carbonate, propylene carbonate, butylene carbonate, trifluoropropylene carbonate, and the like; chain carbonates, such as diethyl carbonate, dimethyl carbonate, ethyl methyl carbonate, dipropyl carbonate, and the like; ether compounds, such as tetrahydrofuran, 2-methyltetrahydrofuran, dimethoxyethane, and the like; sulfur compounds, such as ethyl methyl sulfone, butane sultone, and the like; and phosphorus compounds, such as triethyl phosphate, trioctyl phosphate, and the like. These may be used alone or in combination as a mixture.

As the supporting salt, it is possible to use LiPF₆, LiBF₄, LiClO₄, LiAsF₆, LiN(CF₃SO₂)₂, composite salts thereof, and the like. Further, the non-aqueous electrolytic solution may contain a radical scavenger, a surfactant, a flame retardant, and the like.

Also, as the non-aqueous electrolyte, a solid electrolyte may be used. The solid electrolyte has a property to withstand a high voltage. Examples of the solid electrolyte include inorganic solid electrolytes and organic solid electrolytes.

Examples of the inorganic solid electrolyte include oxide-based solid electrolytes, sulfide-based solid electrolytes, and the like.

No particular limitation is imposed on the oxide-based solid electrolytes. For example, it is preferable to use the oxide-based solid electrolytes that contain oxygen (O) and having lithium-ion conductivity and electron insulation properties. For example, as the oxide-based solid electrolytes, it is possible to use one or more selected from lithium phosphate (Li₃PO₄), Li₃PO₄N_{X}, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}Al_{X}Ti_{2-X}(PO₄)₃ (0≤X≤1), Li_{1+X}Al_{X}Ge_{2-X}(PO₄)₃ (0≤X≤1), LiTi₂(PO₄)₃, Li_{3X}La_{2/3-X}TiO₃ (0≤X≤2/3), Li₅La₃Ta₂O₁₂, Li₇La₃Zr₂O₁₂, Li₆BaLa₂Ta₂O₁₂, Li_{3.6}Si_{0.6}P_{0.4}O₄, and the like.

No particular limitation is imposed on the sulfide-based solid electrolytes. For example, it is preferable to use the sulfide-based solid electrolytes that contain sulfur (S) and having lithium-ion conductivity and electron insulation properties. As the sulfide-based solid electrolytes, it is possible to use one or more selected from Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and the like.

The inorganic solid electrolyte for use may be an inorganic solid electrolyte other than the above-listed ones. Examples thereof include Li₃N, LiI, Li₃N-LiI-LiOH, and the like.

No particular limitation is imposed on the organic solid electrolytes as long as the organic solid electrolytes are a polymer compound exhibiting ionic conductivity. For example, it is possible to use polyethylene oxide, polypropylene oxide, copolymers thereof, and the like. Also, the organic solid electrolyte may contain a supporting salt (lithium salt).

### (Shape and Configuration of Secondary Battery)

The lithium-ion secondary battery of the present embodiment described above can have various shapes, such as a cylindrical shape, a stacked shape, or the like. Regardless of the shape thereof, as long as the secondary battery of the present embodiment uses the non-aqueous electrolytic solution as the non-aqueous electrolyte, a structure that is hermetically closed in a battery casing can be obtained when the positive electrode and the negative electrode are stacked via a separator to form an electrode body, the resulting electrode body can be impregnated with the non-aqueous electrolytic solution. Then, the positive electrode current collector and the positive electrode terminal leading to the exterior are connected to each other using a current collecting lead or the like, and the negative electrode current collector and the negative electrode terminal leading to the exterior are connected to each other using a current collecting lead or the like.

As described above, the secondary battery of the present embodiment is not limited to the form in which the non-aqueous electrolytic solution is used as the non-aqueous electrolyte. The secondary battery may be, for example, a secondary battery using a solid non-aqueous electrolyte, i.e., an all-solid-state battery. In the case of an all-solid-state battery, the configuration other than the positive electrode active material may be changed, if necessary.

The secondary battery of the present embodiment can be used for various applications. The secondary battery of the present embodiment can be a high-capacity, high-output secondary battery. Thus, the secondary battery of the present embodiment is suitable, for example, as a power supply of a small portable electronic device (e.g., a laptop personal computer, a mobile phone terminal, or the like) for which a high capacity is always required. Also, the secondary battery of the present embodiment is suitable as a power supply of an electric vehicle for which a high output is required.

The secondary battery of the present embodiment can be made compact and high-output. Thus, the secondary battery of the present embodiment is suitable as a power supply for an electric vehicle that has limitation in terms of a space available for the power supply. The secondary battery of the present embodiment can be used not only as a power supply for an electric vehicle driven purely by electric energy, but also as a power supply for what is referred to as a hybrid vehicle that also uses a combustion engine, such as a gasoline engine, a diesel engine, or the like.

### EXAMPLES

The present invention will be described below in more detail by way of examples. However, the present invention is not limited in any way by these examples.

First, evaluation methods of the positive electrode active materials and the secondary batteries obtained in the following Examples and Comparative Examples will be described.

### (Evaluation of Positive Electrode Active Material)

The obtained positive electrode active materials were evaluated in the following manner.

### (a) Evaluation of composition

The positive electrode active materials were analyzed for compositions through ICP emission spectrometry. The evaluation results are shown in the column "Composition" in Table 1.

### (b) Occupancy of nickel in lithium site (3b site)

About 2 g of a positive electrode active material produced in the following Examples and Comparative Examples was charged into a vanadium tube, which was then completely sealed. Subsequently, using BL20 (IBARAKI Materials Design Diffractometer, iMATERIA) at the Japan Proton Accelerator Research Complex (J-PARC), neutron diffraction measurement was performed in a double frame mode under the conditions that the intensity of 10,000 cps or higher could be obtained.

A neutron diffraction pattern obtained at a backward detector bank was subjected to Rietveld analysis using analysis software, Z-Code. Here, the space group was set to R-3m, lithium and mixed nickel (nickel in the lithium site) were set in the 3b site as chemical species, and nickel and element M were set in the 3a site as chemical species. After refining scale factors, lattice constants, and global parameters, site occupancies and atomic coordinates were refined. The atomic displacement parameters were fixed to be 0.9 to 1.0 Å² for lithium, 0.3 to 0.5 Å² for nickel and element M, and 0.6 to 0.8 Å² for oxygen. After refining the site occupancies and atomic coordinates, convergence was determined when the reliability parameter S value was 3.0 or less. The site occupancy of nickel in the obtained lithium site (3b site) was determined, and the results are shown in the column "Ni occupancy in 3b site" in Table 1. The reliability parameter S value obtained through Rietveld analysis are shown in the column "S value" in Table 1.

Note that powder neutron diffraction measurement can be performed, for example, by HRPD (High Resolution Powder Diffractometer) installed in a nuclear reactor, JRR-3, of the Japan Atomic Energy Agency, and Super HRPD of J-PARC.

### (c) Half width of peak on (003) plane

An X-ray diffraction pattern was measured by an XRD diffractometer (X'Pert PRO, obtained from Panalytical Ltd.) using a Cu-Kα ray as an X-ray source. From the obtained X-ray diffraction pattern, the half width, i.e., the width of a profile at an intensity value half the maximum intensity, of the diffraction peak on the (003) plane of the hexagonal crystalline layered structure was calculated. A sample was charged into the groove of a circular glass holder (flat-plate sample holder, inner diameter: 24 mm, groove depth: 0.5 mm, and Panalytical product number: 9200 540 12391) having an outer diameter of 32 mm, and fixed to a predetermined sample holder (Panalytical product number: 9430 018 13321) for measurement. The XRD diffractometer used was provided with a Bragg-Brentano optical system.

The evaluation results are shown in the column "(003) half width" in Table 1.

It was confirmed from the obtained X-ray diffraction patterns that the positive electrode active materials produced in the following Examples and Comparative Examples were formed of a lithium nickel complex oxide, and the lithium nickel complex oxide had a hexagonal crystalline layered structure.

### (d) Average primary particle size

In an SEM observation image of lithium nickel complex oxide particles, 15 secondary particles observable in their entireties through image analysis were selected, and primary particles were selected from the selected secondary particles. Here, the primary particles were selected such that the total number of the primary particles was 30.

Also, when the lithium nickel complex oxide particles contained independent primary particles not forming the secondary particles, 10 primary particles observable in their entireties in the SEM observation image were selected.

Then, the major axis lengths of the selected primary particles were measured, and the average value of the measured major axis lengths was defined as the average primary particle size. The evaluation results are shown in the column "Average primary particle size" in Table 1.

When the lithium nickel complex oxide particles contained only the secondary particles, the major axis lengths of 30 primary particles selected from the secondary particles were measured, and the average value of the major axis lengths of all the 30 measured primary particles was defined as the average primary particle size of the lithium nickel complex oxide particles.

Also, when the lithium nickel complex oxide particles contained the independent primary particles in addition to the secondary particles, the major axis lengths of 30 primary particles selected from the secondary particles and the major axis lengths of 10 primary particles selected from the independent primary particles were measured. The average value of the major axis lengths of all the 40 measured primary particles was defined as the average primary particle size of the lithium nickel complex oxide particles.

### (e) Median diameter (D50)

A volume-based particle size distribution was measured by a laser diffraction scattering particle size distribution analyzer (MICROTRAC HRA, obtained from Nikkiso Co., Ltd.), and the median diameter was determined from the measured particle size distribution.

The evaluation results are shown in the column "D50" in Table 1.

### (f) Percentage by number of independent primary particles

The lithium nickel complex oxide particles were embedded in a thermosetting resin, and then polished with a cross-section polisher (SM-09010, obtained from JEOL Ltd.). The obtained cross-sections of the particles were observed using a Schottky field emission scanning electron microscope (Ultra 55, obtained from Carl Zeiss AG), and the percentage by number of independent primary particles out of 100 particles was evaluated.

### (Production and evaluation of secondary battery)

### (a) Evaluation of charge capacity, discharge capacity, and coulombic efficiency

### (a-1) Production of coin-type batteries

Coin-type batteries illustrated in FIG. 2 were produced using the positive electrode active materials produced in the following Examples and Comparative Examples.

As illustrated in FIG. 2, a coin-type battery CBA is formed by a casing CA and electrodes housed in the casing CA.

The casing CA includes a hollow positive electrode can PC with one end open, and a negative electrode can NC disposed in the opening of the positive electrode can PC. When the negative electrode can NC is disposed in the opening of the positive electrode can PC, a space for housing the electrodes is formed between the negative electrode can NC and the positive electrode can PC.

The electrodes include a positive electrode PE, a separator SE1, and a negative electrode NE, which are stacked in this order. The electrodes are housed in the casing CA such that the positive electrode PE contacts the inner surface of the positive electrode can PC, and the negative electrode NE contacts the inner surface of the negative electrode can NC via a wave washer WW.

The casing CA includes a gasket GA. The gasket GA is fixed to restrict relative movement to maintain a non-contact state, i.e., an electrically insulated state, between the positive electrode can PC and the negative electrode can NC. Also, the gasket GA has the function of sealing a gap between the positive electrode can PC and the negative electrode can NC to air-tightly and liquid-tightly separate the interior of the casing CA and the exterior of the casing CA.

This coin-type battery CBA was produced in the following manner. First, 52.5 mg of the positive electrode active material obtained in each of Examples and Comparative Examples, 15 mg of acetylene black, and 7.5 mg of a polytetrafluoroethylene (PTFE) resin were mixed. Then, the obtained mixture was thinned to have a diameter of 11 mm and a weight of about 75 mg, thereby producing the positive electrode PE. This was dried in a vacuum dryer at 100°C for 12 hours.

Using the produced positive electrode PE, the negative electrode NE, the separator SE1, and an electrolytic solution, the coin-type battery CBA was produced in an Ar atmosphere glove box controlled to a dew point of -60°C.

The negative electrode NE used was lithium metal punched into a disk shape having a diameter of 13 mm.

The separator SE1 used was a polyethylene porous membrane having a thickness of 25 µm. The electrolytic solution used was a liquid mixture containing ethylene carbonate (EC) and diethyl carbonate (DEC), with 1M LiClO₄ as a supporting electrolyte, at a mixing ratio of 1:1 on a volume basis (obtained from Tomiyama Pure Chemical Industries, Ltd.).

(a-2) Evaluations of charge capacity, discharge capacity, and efficiency After the production of the coin-type battery CBA, the coin-type battery CBA was left to stand for about 12 hours to stabilize an open circuit voltage OCV (open circuit voltage). Subsequently, the battery was charged to a cutoff voltage of 4.3 V at a current density of 0.1 mA/cm² for the positive electrode. The charge capacity at this time was defined as the charge capacity. Also, after charging, the battery was discharged to a cutoff voltage of 2.5 V after one-hour suspension. The discharge capacity at this time was defined as the discharge capacity. Further, Coulombic efficiency, which is a ratio of the discharge capacity to the charge capacity, was calculated.

### (b) Cycle characteristics

### (b-1) Production of laminate-type batteries

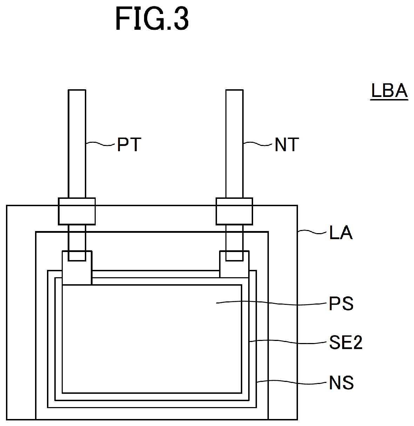

Laminate-type batteries illustrated in FIG. 3 were produced using the positive electrode active materials produced in the following Examples and Comparative Examples.

As illustrated in FIG. 3, a laminate-type battery LBA has a structure in which a stack of a positive electrode membrane PS, a separator SE2, and a negative electrode membrane NS is impregnated with an electrolytic solution, and sealed with a laminate LA. A positive electrode tab PT is connected to the positive electrode membrane PS, a negative electrode tab NT is connected to the negative electrode membrane NS, and the positive electrode tab PT and the negative electrode tab NT are exposed outside the laminate LA.

This laminate-type battery LBA was produced in the following manner. Specifically, a slurry in which 20.0 g of the obtained positive electrode active material, 2.35 g of acetylene black, and 1.18 g of polyvinylidene fluoride were dispersed in N-methyl-2-pyrrolidone (NMP) was coated on an Al foil such that 7.0 mg of the positive electrode active material was present per 1 cm². Next, the Al foil, on which the slurry containing the positive electrode active material was coated, was dried at 120°C for 30 minutes in the atmosphere to remove the NMP. The Al foil, on which the positive electrode active material was coated, was cut into a strip having a width of 66 mm, and roll-pressed under a load of 1.2 t, thereby producing a positive electrode membrane. The positive electrode membrane was cut into a rectangle shape having a width of 50 mm×30 mm, and dried in a vacuum dryer at 120°C for 12 hours. The resulting product was used as the positive electrode membrane PS of the laminate-type battery LBA.

Also, the negative electrode membrane NS, in which a negative electrode mixture paste was coated on a copper foil, was provided. The negative electrode mixture paste was a mixture of graphite powder, having an average particle size of about 20 µm, and polyvinylidene fluoride. The separator SE2 used was a polyethylene porous membrane having a thickness of 20 µm. The electrolytic solution used was a 3:7 liquid mixture containing ethylene carbonate (EC) and diethyl carbonate (DEC) with 1M LiPF₆ as a supporting electrolyte (obtained from UBE Corporation).

In a dry room controlled to a dew point of -60°C, a stack of the positive electrode membrane PS, the separator SE2, and the negative electrode membrane NS was impregnated with the electrolytic solution, and sealed with the laminate LA, thereby producing the laminate-type battery LBA.

### (b-2) Cycle characteristics

The cycle characteristics were evaluated by measuring the capacity maintenance rate after 500 cycles of charging and discharging. Specifically, first, the laminate-type battery LBA was subjected to conditioning in a thermostatic chamber maintained at 25°C. The conditioning was performing five cycles each charging to a cutoff voltage of 4.2 V at a current density of 0.3 mA/cm², suspending for 10 minutes, and discharging to a cutoff voltage of 2.5 V. Next, the conditioned laminate-type battery LBA was subjected to 500 cycles in a thermostatic chamber maintained at 45°C, each cycle including charging to a cutoff voltage of 4.2 V at a current density of 2.0 mA/cm², suspending for 10 minutes, and discharging to a cutoff voltage of 2.5 V. The capacity maintenance rate, i.e., a ratio of the discharge capacity at the 500^{th} cycle after the conditioning to the discharge capacity at the first cycle after the conditioning, was calculated and evaluated. The discharge capacity at the first cycle and the capacity maintenance rate are shown in the columns "Initial discharge capacity" and "Capacity maintenance rate" of "Cycle characteristics" in Table 1.

### (Production Conditions of Positive Electrode Active Material)

### [Example 1]

A raw material mixture was produced by mixing a nickel complex oxide (D50 particle diameter: 5.2 µm), which was obtained by a publicly known method and in which a ratio by mole of nickel and cobalt was Ni:Co=95.0:5.0, and lithium hydroxide (mixing step).

In the mixing step, the nickel complex oxide and the lithium hydroxide were sufficiently mixed using a shaker mixer (model: TURBULA Type T2C, obtained from Willy A. Bachofen (WAB) AG) to prepare a raw material mixture.

In the mixing step, the raw materials were weighed and mixed such that Li/Me, i.e., a ratio by mole of lithium (Li) contained in the raw material mixture to nickel and cobalt (Me), which are metals other than lithium, would be 0.92. The nickel complex oxide was obtained by thermally treating the nickel complex hydroxide obtained by a crystallization method.

This raw material mixture was fired in an oxygen-containing atmosphere in which the oxygen concentration was 90% by volume and the balance was nitrogen (firing step). The oxygen concentration in the oxygen-containing atmosphere in the firing step is shown in the column "Oxygen concentration" in Table 1. In the first firing step, for firing, the raw material mixture was heated to a temperature of 500°C, i.e., the first firing temperature, and maintained at the first firing temperature, 500°C, for seven hours. After the first firing step, the second firing step was performed. In the second firing step, for firing, the raw material mixture was heated to a temperature of 780°C, i.e., the second firing temperature, and maintained at the second firing temperature, 780°C, for 12 hours.

The lithium nickel complex oxide after firing was crushed (crushing step) to obtain a positive electrode active material formed of lithium nickel complex oxide particles.

When the obtained positive electrode active material was observed by an SEM, it was confirmed that the particles of the lithium nickel complex oxide had an average primary particle size of 1.2 µm, and were formed of secondary particles formed of the primary particles. That is, the percentage by number of independent primary particles was 0. In Examples 2 and 4 below, the percentage by number of independent primary particles was 0.

Other evaluation results are shown in Table 1.

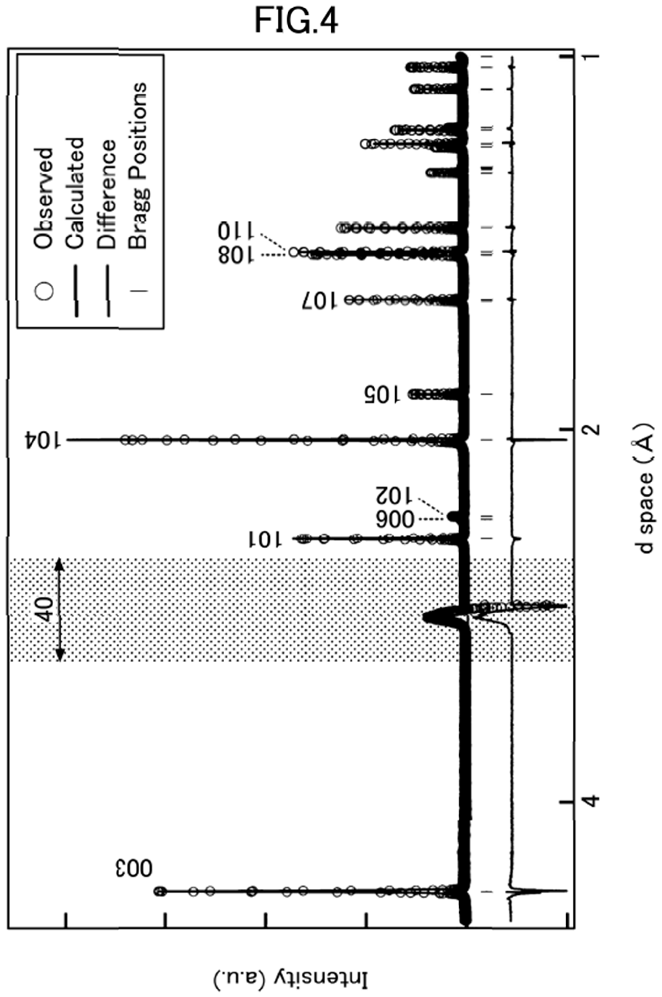

FIG. 4 shows a powder neutron diffraction pattern (Observed) of the lithium nickel complex oxide measured in Example 1. FIG. 4 also shows a simulation pattern (Calculated) obtained through Rietveld analysis, a difference between the measured powder neutron diffraction pattern and the simulation pattern (Difference), and Bragg Positions. In FIG. 4, a region 40 is excluded from the target of the Rietveld analysis because a peak was generated in the measurement of this region due to a failure of the device for which a neutron ray of a wavelength cut in a normal measurement was not cut.

The obtained positive electrode active material was used to produce, and evaluate, the above-described coin-type battery and laminate-type battery. The evaluation results are shown in Table 1.

### [Example 2]

The mixing ratio of the lithium hydroxide to the nickel complex oxide in the mixing step was changed such that Li/Me of the raw material mixture would be the value shown in the column "Ratio Li/Me charged" in Table 1. The retention time at the first firing temperature in the first firing step was set to the condition shown in Table 1. Under the same conditions as in Example 1 except for the above, a positive electrode active material, a coin-type battery, and a laminate-type battery were produced and evaluated. The evaluation results are shown in Table 1.

### [Example 3]

The retention time at the first firing temperature in the first firing step, the retention time at the second firing temperature in the second firing step, and the oxygen concentration of the oxygen-containing atmosphere in the firing step were set to the conditions shown in Table 1. Further, the lithium nickel complex oxide after the crushing step was pulverized in a ball mill (pulverizing step) to obtain a positive electrode active material formed of lithium nickel complex oxide particles.

A positive electrode active material, a coin-type battery, and a laminate-type battery were produced and evaluated under the same conditions as in Example 2 except for the above. The evaluation results are shown in Table 1.

When the obtained positive electrode active material was observed by an SEM, it was confirmed that the particles of the lithium nickel complex oxide contained independent primary particles and secondary particles in which a plurality of primary particles were aggregated.

The percentage by number of the independent primary particles was calculated to be 91.3%.

### [Example 4]

In the mixing step, as the nickel complex oxide, a nickel complex oxide having a ratio by mass of nickel, manganese, and cobalt of Ni:Mn:Co=85.0:10.0:5.0 was used. The mixing ratio of the lithium hydroxide to the nickel complex oxide was selected such that Li/Me of the raw material mixture was the value shown in the column "Ratio Li/Me charged" in Table 1.

In the firing step, the retention time at the first firing temperature in the first firing step and the second firing temperature in the second firing step were set to the conditions shown in Table 1. Under the same conditions as in Example 1 except for this, a positive electrode active material, a coin-type battery, and a laminate-type battery were produced and evaluated. The evaluation results are shown in Table 1.

### [Example 5]

The retention time at the first firing temperature in the first firing step, the retention time at the second firing temperature in the second firing step, and the oxygen concentration in the oxygen-containing atmosphere in the firing step were set to the conditions shown in Table 1. Further, the lithium nickel complex oxide after the crushing step was pulverized in a ball mill (pulverizing step) to obtain a positive electrode active material formed of lithium nickel complex oxide particles.

Under the same conditions as in Example 4 except for the above, a positive electrode active material, a coin-type battery, and a laminate-type battery were produced and evaluated. The evaluation results are shown in Table 1.

When the obtained positive electrode active material was observed by an SEM, it was confirmed that the particles of the lithium nickel complex oxide contained independent primary particles and secondary particles in which a plurality of primary particles were aggregated.

The percentage by number of the independent primary particles was calculated to be 97.5%.

### [Comparative Example 1]

The mixing ratio of the lithium hydroxide to the nickel complex oxide in the mixing step was changed such that Li/Me of the raw material mixture would be the value shown in the column "Ratio Li/Me charged" in Table 1. Under the same conditions as in Example 2 except for this, a positive electrode active material, a coin-type battery, and a laminate-type battery were produced and evaluated. The evaluation results are shown in Table 1.

### [Comparative Example 2]

Pure water of 20°C was added to the positive electrode active material obtained in Comparative Example 1 to obtain a slurry containing 1,250 g of the positive electrode active material per 1 L of water (slurry formation step). Next, the slurry was stirred for 20 minutes and allowed to pass through a filter press, followed by dehydration, thereby producing a washed cake (solid-liquid separation step). As the pure water, water having an electrical conductivity of 1 µS/cm or less was used.

The obtained washed cake was dried at 190°C for 10 hours under a vacuum atmosphere to obtain a positive electrode active material of Comparative Example 2 (drying step).

The obtained positive electrode active material was evaluated as described above. The evaluation results are shown in Table 1. In the same manner as in Example 1 except that the obtained positive electrode active material was used, a coin-type battery and a laminate-type battery were produced and evaluated. The evaluation results are shown in Table 1.

### [Comparative Example 3]

The mixing ratio of the lithium hydroxide to the nickel complex oxide in the mixing step was changed such that Li/Me of the raw material mixture would be the value shown in the column "Ratio Li/Me charged" in Table 1. Under the same conditions as in Example 4 except for this, a positive electrode active material, a coin-type battery, and a laminate-type battery were produced and evaluated. The evaluation results are shown in Table 1.

**[Table 1-1]**

| | Composition | | | | Ratio Li/Me charged | First firing step | | Second firing step | | Oxygen conc. (%) | S value | Ni occupancy in 3b site (%) | (003) half width (° ) | Average primary particle size (µm) | D50 (µm) | Initial battery characteristics | | | Cycle characteristics | |
|---|---|---|---|---|---|---|---|---|---|---|---|---|---|---|---|---|---|---|---|---|
| | | | | | | First firing temp. (°C) | Reten -tion time (hour) | Second firing temp. (°C) | Reten -tion time (hour) | | | | | | | Charge capacity (mAh g⁻¹) | Discharge capacity (mAh g⁻¹) | Coulombic efficiency (%) | Initial discharge capacity (mAh g⁻¹) | Capacity maintenance rate (%) |
| | Li | Ni | Mn | Co | | | | | | | | | | | | | | | | |
| Example 1 | 0.92 | 0.95 | - | 0.05 | 0.92 | 500 | 7 | 780 | 12 | 90 | 2.23 | 5.6 | 0.068 | 1.2 | 6.8 | 233.9 | 203.8 | 87.1 | 158.3 | 65.8 |
| Example 2 | 0.97 | 0.95 | - | 0.05 | 0.97 | 500 | 6 | 780 | 12 | 90 | 2.12 | 2.8 | 0.065 | 2.0 | 7.5 | 249.4 | 220.9 | 88.6 | 163.1 | 64.3 |
| Example 3 | 0.97 | 0.95 | - | 0.05 | 0.97 | 500 | 7 | 780 | 15 | 95 | 2.16 | 2.6 | 0.064 | 1.8 | 2.1 | 250.0 | 222.6 | 89.0 | 164.0 | 68.0 |

**[Table 1-2]**

| | | | | | | | | | | | | | | | | | | | | |
|---|---|---|---|---|---|---|---|---|---|---|---|---|---|---|---|---|---|---|---|---|
| Example 3 | 0.97 | 0.95 | - | 0.05 | 0.97 | 500 | 7 | 780 | 15 | 95 | 2.16 | 2.6 | 0.064 | 1.8 | 2.1 | 250.0 | 222.6 | 89.0 | 164.0 | 68.0 |
| Example 4 | 0.98 | 0.85 | 0.10 | 0.05 | 0.98 | 500 | 6 | 870 | 12 | 90 | 2.56 | 5.9 | 0.063 | 1.9 | 16.5 | 233.6 | 203.0 | 86.9 | 158.8 | 70.2 |
| Example 5 | 0.98 | 0.85 | 0.10 | 0.05 | 0.98 | 500 | 7 | 870 | 15 | 95 | 2.70 | 5.6 | 0.071 | 1.8 | 2.0 | 230.6 | 201.7 | 87.5 | 156.1 | 73.6 |

**[Table 1-3]**

| | Composition | | | | Ratio Li/Me charged | First firing step | | Second firing step | | Oxygen conc. (%) | S value | Ni occupancy in 3b site (%) | (003) half width (° ) | Average primary particle size (µm) | D50 (um) | Initial battery characteristics | | | Cycle characteristics | |
|---|---|---|---|---|---|---|---|---|---|---|---|---|---|---|---|---|---|---|---|---|
| | | | | | | First firing temp. (°C) | Reten -tion time (hour) | Second firing temp. (°C) | Reten -tion time (hour) | | | | | | | Charge capacity (mAh g⁻¹) | Discharge capacity (mAh g⁻¹) | Coulombic efficiency (%) | Initial discharge capacity (mAh g⁻¹) | Capacity maintenance rate (%) |
| | Li | Ni | Mn | Co | | | | | | | | | | | | | | | | |
| Comparative Example 1 | 1.02 | 0.95 | - | 0.05 | 1.02 | 500 | 6 | 780 | 12 | 90 | 2.23 | 1.8 | 0.066 | 1.2 | 8.8 | 245.8 | 211.0 | 85.8 | 166.0 | 58.7 |
| Comparative Example 2 | 0.98 | 0.95 | - | 0.05 | 1.02 | 500 | 6 | 780 | 12 | 90 | 2.31 | 1.8 | 0.064 | 1.2 | 8.5 | 234.5 | 199.8 | 85.2 | 156.3 | 55.3 |
| Comparative Example 3 | 1.02 | 0.85 | 0.10 | 0.05 | 1.02 | 500 | 6 | 870 | 12 | 90 | 2.46 | 2.4 | 0.062 | 1.4 | 17.3 | 230.6 | 200.7 | 87.0 | 156.5 | 66.6 |

### (Evaluation Results)

According to the results shown in Table 1, it was confirmed that the positive electrode active materials of Examples 1 to 3, in which the occupancy of nickel existing in the lithium site (3b site) was 2.5% or more and 10.0% or less, had enhanced cycle characteristics compared to Comparative Examples 1 and 2 having the same content ratios of nickel and element M.

Also, the same was confirmed by comparing Examples 4 and 5 with Comparative Example 3.

This application claims priority to Japanese Patent Application No. 2023-123249, filed with the Japan Patent Office on July 28, 2023, and the entire contents of Japanese Patent Application No. 2023-123249 are incorporated in this international application by reference.

### REFERENCE SIGNS LIST

- CBA: Coin-type battery
- PE: Positive electrode
- NE: Negative electrode
- SE1: Separator
- GA: Gasket
- WW: Wave washer
- CA: Casing
- PC: Positive electrode can
- NC: Negative electrode can
- LBA: Laminate-type battery
- PS: Positive electrode membrane
- NS: Negative electrode membrane
- SE2: Separator
- LA: Laminate
- PT: Positive electrode tab
- NT: Negative electrode tab

## Claims

1. A positive electrode active material for a lithium-ion secondary battery, the positive electrode active material comprising:
a lithium nickel complex oxide having a hexagonal crystalline layered structure, wherein
the lithium nickel complex oxide contains lithium (Li), nickel (Ni), and element M (M) at a ratio by mole of Li:Ni:M=a:b:c (where 0.90≤a<1.00, 0.80≤b<1.00, 0.00<c≤0.20, b+c=1, and element M is at least one element selected from the group consisting of Mn, Co, Al, Ti, Zr, W, Fe, Si, Nb, Mg, Ca, B, Na, K, Mo, Cu, V, P, and Ba),
an occupancy of nickel existing in a lithium site (3b site) is 2.5% or more and 10.0% or less, in which the occupancy is obtained through analysis by a Rietveld method of a powder neutron diffraction pattern of the lithium nickel complex oxide, and
a half width of a diffraction peak on a (003) plane in a powder X-ray diffraction pattern of the lithium nickel complex oxide as measured using a Cu-Kα ray as an X-ray source is 0.054° or more and less than 0.074°.

2. The positive electrode active material for the lithium-ion secondary battery according to claim 1, wherein
an average primary particle size of the lithium nickel complex oxide is more than 0.5 µm and 6.0 µm or less.

3. The positive electrode active material for the lithium-ion secondary battery according to claim 1 or 2, wherein
a median diameter in a volume-based particle size distribution obtained by a laser diffraction scattering method is 0.5 µm or more and 20 µm or less.

4. A lithium-ion secondary battery, comprising:
a positive electrode;
a negative electrode; and
a non-aqueous electrolyte, wherein
the positive electrode contains the positive electrode active material for the lithium-ion secondary battery of any one of claims 1 to 3.
